Europäisches Patentamt

European Patent Office

Office européen des brevets

(11) Publication number: **0 039 599**
**B1**

(12) **EUROPEAN PATENT SPECIFICATION**

(45) Date of publication of patent specification: **28.08.85**

(51) Int. Cl.⁴: **F 16 K 27/06, B 21 K 1/20**

(21) Application number: **81301947.8**

(22) Date of filing: **01.05.81**

(54) Integral end closure and hub for a ball valve body.

(30) Priority: **05.05.80 US 146764**

(43) Date of publication of application:
**11.11.81 Bulletin 81/45**

(45) Publication of the grant of the patent:
**28.08.85 Bulletin 85/35**

(84) Designated Contracting States:
**DE FR GB IT NL**

(56) References cited:
**DD-A- 56 678**
**DE-B-2 032 132**
**FR-A-1 100 159**
**GB-A- 952 791**
**US-A-3 737 145**
**US-A-4 168 619**

(73) Proprietor: **GROVE VALVE AND REGULATOR COMPANY**
**6529 Hollis Street**
**Oakland California 94608 (US)**

(72) Inventor: **Connolly, Walter L.**
**133 Danefield Place**
**Moraga California (US)**
Inventor: **Ray, Harold T.**
**1548 Siskiyou Drive**
**Walnut Creek California (US)**

(74) Representative: **Williams, Trevor John**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an integral valve end closure and hub for a fluid flow control valve and to a method of making such end closure and hub.

It has been found highly advantageous, where possible, to form large diameter valve bodies and other pressure vessels from rolled steel shapes, wherein the material is generally denser and of greater uniformity than can usually be achieved with metal castings. For example, ball valves, check valves and fluid flow control valves are commonly formed with a main body band of cylindrical or spherical configuration, with at least one full size end opening through which a ball, clapper, plug or other closure member can be inserted. In completing fabrication, this opening is covered with an end closure carrying a hub for attaching the valve member into a pipeline. When forming the end closure of steel plates, it is conventional practice to form it in at least two pieces, one a flat plate with a large central opening which is bolted or otherwise secured to a main body member, and the other a cylindrical pipe which is welded into the opening for installation in a pipeline. Often, recesses are cut into the flat plate to accommodate sealing rings which engage against the valve member to effect a seal. The main body member, then, must be wide enough to cover at least the great majority of the width of the valve member and span the space between the two flat inner surfaces of the opposing end closures. Such a ball valve, in accordance with the prior art portion of claim 1 is disclosed in US—A—3,737,145.

It is an object of this invention as claimed in claim 1, to provide a valve body end closure which uses, without waste, virtually all of the metal of a circular plate section, there being provided a one-piece valve end closure and hub of plate steel which eliminates the extensive welding operation which would otherwise be required to secure a cylindrical hub to the plate.

An end closure which has been formed by unidirectional swaging in accordance with the invention, as well as having the manufacturing advantages over the prior art specified above with the elimination of extensive welding also provides a stronger structure in that the end closure has a very strong metal fibre orientation internally because of the small flow-lines of the metal caused during the unidirectional swaging manufacture thereof.

In DE—B—2032132 there has been disclosed a method of forming an end closure in the manufacture of a valve body in which the end closure is formed from a single thick flat steel plate which is swaged axially of a central flow passage through the closure to form a hub portion for connection to a pipeline with a valve seat being provided on the interior of the end closure. While this method does provide a one piece end closure formed, rather than machine welded, from a single metal plate, it uses swaging operations carried in opposite directions with the consequential reverse flow deformation of the metal causing the flow lines in the metal during formation to be distorted leading to a reduction in the overall strength of the finished end portion. While this is not of great importance in small valves where the amount of metal used is of no great importance, it is of great importance where the valves may be of the large size to which the present invention is applicable, for example for use with pipelines of a metre or more in diameter when the forces tending to distort the valve body in use thereof can be very large indeed. There is no appreciation at all in DE—B—2032132 of the advantages achievable by controlled grain orientation despite the fact that in other fields of manufacture the desirability of controlling the internal grain structure has been appreciated as disclosed in connection with a forging operation in, for example, US—A—4168619. Rolled steel has a uni-directional grain orientation and with the hubs being swaged from the same steel plate with the swaging being uni-directional there is a continuity of fibre orientation from the outer circumference of the flange portion, through the tapered portion, to the end of the cylindrical hub portion. This continuity of fibre orientation gives a considerable increase of strength as compared with the lack of such fibre orientation and this emphasizes the advantage over the prior welded end portion constructions previously used in very large sized valves prepared for pipeline usage. Further, with the unobstructed tapered portion the inner surface of the end closure can be made to follow quite closely with the outer surface of a valve ball and can also readily have a recess cut therein for the receipt of a seal assembly, this recess being cut in the portion of the end closure which is least subject to stress with the more highly stressed portions of the end closure being at the points of merger of the hub and flange with the tapered portion, these points of merger being unweakened and provided with a smooth continuity of fibre orientation therethrough.

Preferably the ball valve end closures are formed from plate in two stages, a first stage forming the flange and tapered portions with a hub portion having a slightly tapered inner surface and a second, finishing stage, in which a spherical ball is forced through the workpiece to expand the interior surface of the hub portion into cylindrical form. In a particularly exemplified method which has been found to give very good results in practice in the production of large sized ball valves the swaging operation is carried out by forcing a tapered male die of circular cross-section through a central opening in the plate; then placing the plate in a female die having a lower inner surface of generally cylindrical configuration; and then forcing a male finishing die having a maximum circular cross-section the diameter to which corresponds generally to the desired inner diameter of the hub portion and a smaller leading cross-section of increasing diameter to the maximum diameter. Suitably the male finishing die may be a simple sphere and good results are found to be achieved when a tapered die has a slightly tapered leading portion to form the hub portion nearly cylindrical, and a sharply tapered trailing portion.

Particular embodiments of the invention are set out in the dependent claims.

The invention will be further described, by way of example, with reference to the accompanying drawings, wherein:

FIGURE 1 is an elevation view, half in section, of a ball valve embodying the invention;

FIGURES 2, 3 and 4 are schematic views in section showing three stages of an initial swaging operation in the manufacture of part of the valve body of the valve of Figure 1;

FIGURE 5 is a schematic view in section showing a subsequent swaging operation; and

FIGURE 6 is a schematic section view, illustrating the removal of material in subsequent machining operations to complete the end closure.

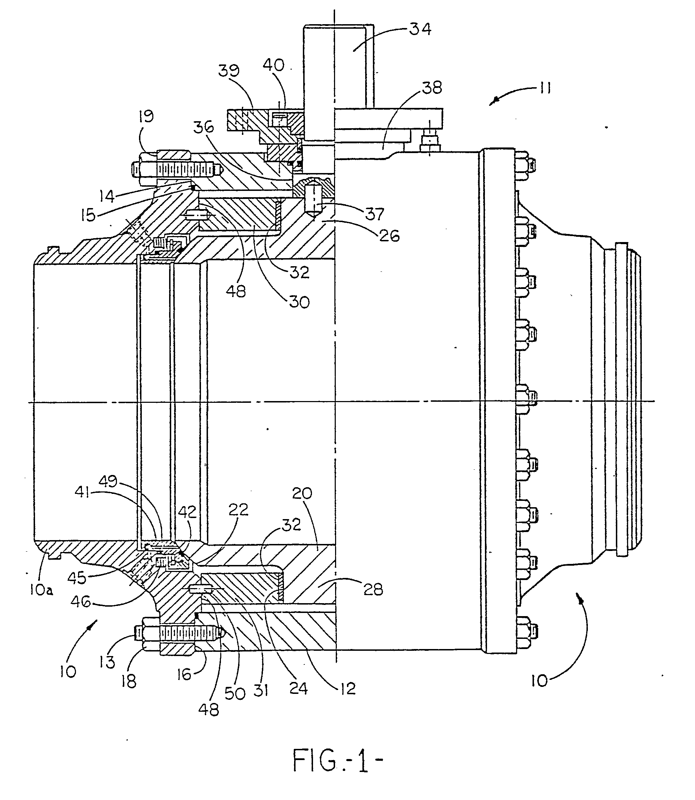

Referring now to Figure 1 a valve is shown having end closures 10 provided with integral hubs 10a the ends of which have been adapted for installation in a pipeline by machining them for welding. The integral structures are shown as principal components of a ball valve 11 of a type which is widely sold for pipeline installations. The ball valve 11 includes a main body band 12 of cylindrical configuration formed by rolling up a steel plate, and the end closures are secured directly to the body band by means of a plurality of studs 13, which are threaded into the tapped openings around the annular end 14 of the body. The end closures 10 are placed over the studs 13 with a flange surface 16 thereon engaging the annular body band end surfaces. Nuts 18 are tightened against the outer flange surface 19 to secure the end closures 10 in place. A seal ring 15 around the annular end 14 renders the structure 12 fluid tight.

In practice, one end closure 10 with seat ring assembly 41 therein, is secured to the body band 12 as just described. A valve ball 20 which may be cast has been machined at 22 to form a smooth, highly polished spherical outer surface and at 24, to finish upper and lower journals 26 and 28 which are formed integral with the ball 20. Top and bottom bearing blocks 30 and 31, each with suitable bushings 32, are placed over the journals 26 and 28 and the entire assembly is inserted into the open end of the body band 12.

A stem 34 is inserted through a top opening 36 in the body band, is coupled to the upper trunnion 26 by means of pins 37. Finally, a gland plate 38 with suitable sealing means to seal around it, as well as around the stem 34, together with a valve operator mounting plate 39, are secured in place by means of cap screws 40.

In completing the fabricating operation, the seat rings 41 with suitable seal rings 42 and 49 for sealing against the valve ball 20 and the end closure 10, respectively, are inserted in place in recesses 45 in the end closure, against biasing springs 46. Then the second end closure is mounted on the main body band and bolted to the annular end thereof, as previously described. When so secured an extended face 48 on the end closure clamps firmly against the bearing blocks 30 and 31 which are positioned relative to the end closure by pins 50.

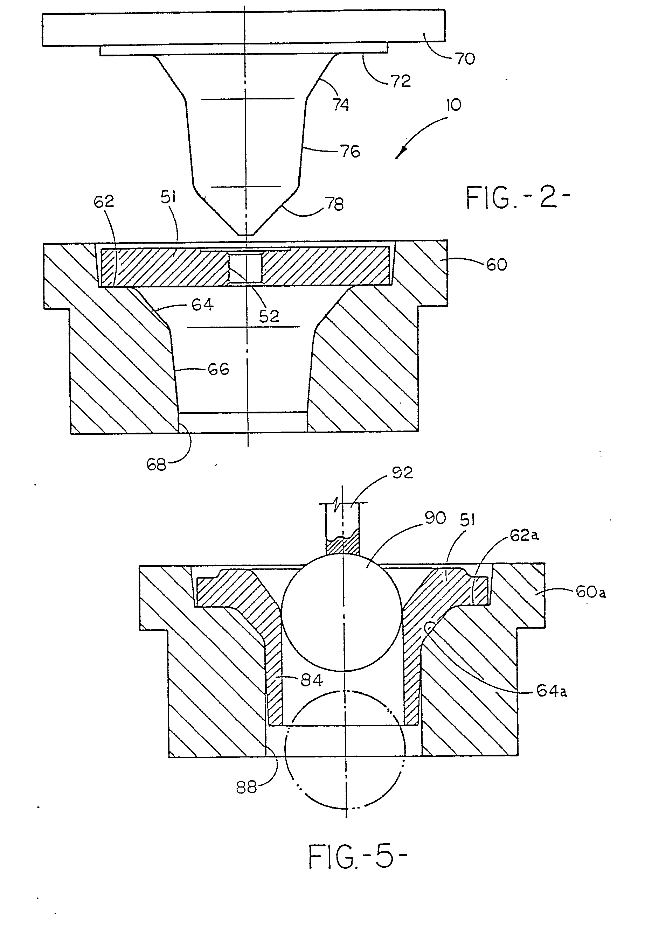

Referring now to Figures 2 to 4 the end closure 10 is formed by cutting a circular work-piece 51 of rolled steel plate through which a small coaxial, circular opening 52 is cut. The work-piece 51 is placed in a female die 60 having a generally planar outer support surface 62, which merges into a sharply flared upper conical surface 64, and then into a slightly tapered lower surface 66. Cooperating with the female die is a male die 70 having male surfaces 72, 74 and 76, which are complementary to the inner surfaces 62, 64 and 66 of the female die, and a sharply tapered end portion 78.

In formation, the work-piece 51 is heated to glowing and placed in the die 60. The die 70 is driven down to swage the steel around the small center opening 52 to a configuration following the contours of the dies 60 and 70. Specifically the work-piece 51, which will ultimately become an end closure 10, retains a flat, planar outer portion 80 for attachment to the body band 12 and then tapers sharply at 82 into a smaller diameter and then more gradually at 84 to a diameter slightly less than the ultimate pipeline diameter.

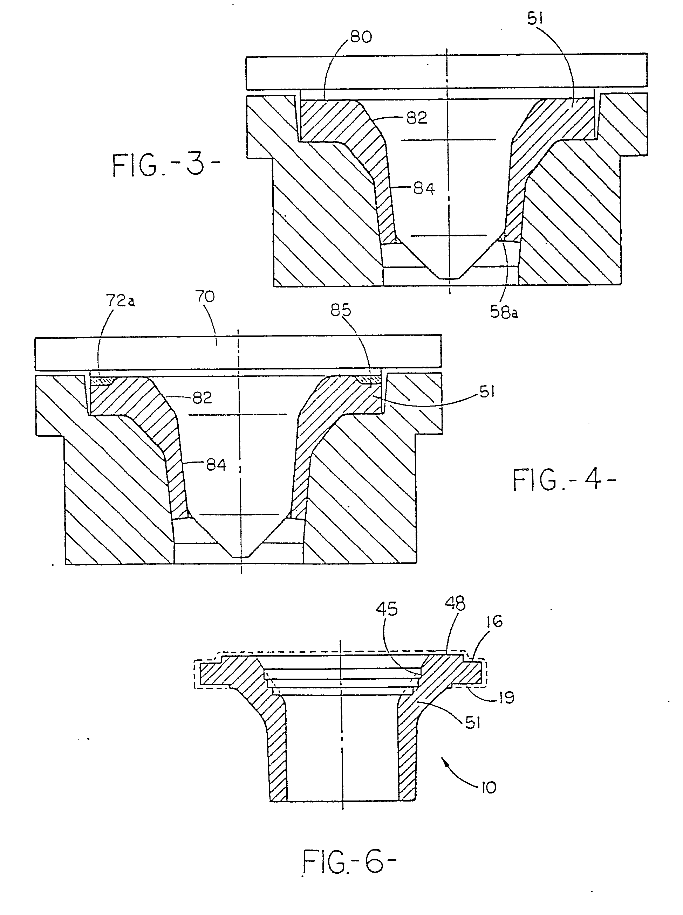

Since, as shown in Figure 1, that annular portion 48 of the end closure 10 which clamps and secures the bearing blocks 30 and 32 is somewhat thicker than the annular radially outward portion 85 shown in Figure 4, some machining can be saved, and the strength in the area of the bolting circle enhanced, by compressing the outer annular portion 85 of the work-piece 51 by forging with an annular die 72a. This both reduces the thickness of the radially outward portion 85 and improves the grain flow lines of the outer portion 85.

Referring now to Figure 5, the final swaging operation is done in a second female die 60a again having a flat, planar outer support surface 62a and a rather sharply tapered outer portion 64a. However, this sharply tapered portion 64a merges directly into a substantially cylindrical opening 88 adapted to accommodate a male die of circular cross-section. For example, a sphere 90 of a diameter substantially equal to the desired inner hub diameter may be forced through the workpiece 51 to dilate the previously tapered outer portion of the work-piece into the cylindrical configuration shown.

Finally, as shown in Figure 6, the work-piece 50 undergoes machining operations for removal of material, as indicated by dotted lines, to form the bolting flange surface 16 and 18, the bearing block clamping surfaces 48, and the seat ring recesses 45.

It will be noted that, in forming an end closure 10 as described above a much smaller hole 52 than was required in previous forming methods is cut through the work-piece 50. This reduces cutting time and it saves a quantity of steel that was often wasted previously. The method also eliminates the need to form a separate cylindrical hub which, when formed by rolling a flat plate, required a welding operation to form a seam between the ends, which were rolled together. Further, the method eliminates the need to machine both the flat plate and the cylindrical hub to prepare them for welding, and it eliminates the welding operation itself, not to mention the extensive weld tests and inspections that are required for safety and environmental purposes. After preparing the work-piece, the end closure with integral hub is formed for finish machining by two successive swaging operations.

The hub so formed has the strength and simplicity of an integral structure, and being formed from rolled steel plate it has the fiber structure common to rolled steel flowing in continuity from the outer periphery of the end closure 10, along the hub portion 84 to the pipeline connection end 10a.

The funnel shape of the end closure may provide greater strength and, by cutting seat ring recesses 45 in the tapered portion 82, they are displaced from the planar outer surfaces 16 and 48. This enables use of a narrower body band 12, effecting a further saving in metal.

## Claims

1. A ball valve comprising a generally cylindrical tubular main body band (12) provided with annular end surfaces (14), a valve ball (20) journalled in the main body band and cylindrical end closures (10) fabricated from steel plate and attached to the body band to enclose the valve ball therebetween; each end closure including a flange portion (16, 19) for connection to the body band and a tubular hub portion (10a) for connection to pipeline; an annular recess (45) being cut in the inner surface of at least one of said end closure portions to receive a seal ring assembly (41) cooperable with the valve ball, characterized in that each end closure (10) has been formed from a single thick flat steel plate (51);

in that the steel of the end closure has been swaged unidirectionally and axially outwardly around the central flow passageway to form a hub portion (10a) integral with the flange portion (16, 19);

in that the hub portion (10a) is flaring radially outwardly towards the flange portion (16, 19) so as to constitute an intermediate tapered portion extending closely adjacent to the surface of the valve ball and merging with the flange portion;

and in that the annular recess (45) for the seal ring assembly (41) is cut both in the flange portion (16, 19) and said intermediate tapered portion, so that the width of the body band (12) is less than the diameter of the valve ball (20).

2. A ball valve as claimed in claim 1, characterized in that the steel of the hub portion (10a) has a tapered inner surface (82) from near the end surface (48) of the flange portion and terminates in a generally cylindrical configuration.

3. A ball valve as claimed in claim 1, characterized in that the steel of the end closure and hub has a generally conical inner surface from near the end surface (48) of said flange portion, merging into a generally cylindrical inner surface at the outer end of the hub portion.

## Patentansprüche

1. Kugelhahn mit
— einem im allgemeinen zylindrischen, röhrenförmigen Hauptgehäusebereich (12), der ringförmige Endflächen (14) aufweist,
— einer Ventilkugel (20), die im Hauptgehäusebereich gelagert ist und
— zylindrischen, aus einer Stahlplatte gefertigten Gehäuseabschlüssen (10), die am Gehäusebereich befestigt sind, um dazwischen die Ventilkugel einzuschließen, wobei
— jeder Gehäuseabschluß
—— einen Flanschabschnitt (16, 19) für die Verbindung mit dem Gehäusebereich und
—— einen röhrenförmigen Anschlußstutzen (10a) für die Verbindung mit einer Pipeline enthält, sowie
— ein ringförmiger Absatz (45) in die Innenfläche zumindest eines der Gehäuseabschlüsse eingeschnitten ist, um einen mit der Ventilkugel zusammenwirkende Dichtringanordnung (41) zu schaffen,
dadurch gekennzeichnet, daß
— jeder Gehäuseabschluß (10) aus einer einheitlich dicken (orig.: single thick), flachen Stahlplatte (51) geformt ist,
— der Stahlkörper (orig.: steel) des Gehäuseabschlusses einseitig und axial auswärts um den zentralen Durchflußbereich gesenkgeschmiedet (orig.: swaged) ist, um einen mit dem Flanschbereich (16, 19) eine Einheit bildenden Anschlußstutzen (10a) zu formen,
— sich der Anschlußstutzen (10a) radial nach außen zum Flanschbereich (16, 19) hin erweitert, um einen dazwischenliegenden, abgeschrägten Abschnitt zu bilden, der sich nahe neben der Oberfläche der Ventilkugel liegend erstreckt und in den Flanschbereich übergeht und
— der ringförmige Absatz (45) für die Dichtringanordnung (41) sowohl in den Flanschabschnitt (16, 19), als auch in den zwischenliegenden, abgeschrägten Abschnitt eingeschnitten ist, so daß die Weite des Gehäusebereiches (12) geringer ist als der Durchmesser der Ventilkugel (20).

2. Kugelhahn nach Anspruch 1, dadurch gekennzeichnet, daß der Stahlkörper des Anschlußstutzens (10a) eine abgeschrägte, von nahe der Endfläche (48) des Flanschabschnittes ausgehende Innenfläche (82) aufweist, die in einer generell zylindrischen Anordnung endet.

3. Kugelhahn nach Anspruch 1, dadurch gekennzeichnet, daß der Stahlkörper des Gehäuseabschlusses und Anschlußstutzens eine generell konisch geformte Innenfläche aufweist, die von nahe der Endfläche (48) des Flanschabschnittes ausgehend in eine generell zylindrische Innenfläche am äußeren Ende des Anschlußstutzens übergeht.

**Revendications**

1. Robinet à tournant sphérique comportant une bande principale tubulaire de forme générale cylindrique pour le corps (12) comprenant des surfaces annulaires d'extrémité (14), un tournant sphérique (20) tourillonnant dans la bande principale formant corps et des flasques cylindriques de fermeture d'extrémité (10) fabriqués à partir d'une tôle d'acier et fixés à la bande formant corps pour enfermer entre eux le tournant sphérique; chaque flasque de fermeture d'extrémité incluant une portion (16, 19) formant flasque pour liaison à la bande formant corps ainsi qu'une portion tubulaire formant embout (10a) pour liaison au pipeline; un évidement annulaire (45) étant usiné dans la surface interne d'au moins l'une des dites portions formant flasque de fermeture d'extrémité pour recevoir une bague d'étanchéité (41) qui peut coopérer avec le tournant sphérique,
caractérisé en ce que chaque flasque de fermeture d'extrémité (10) a été formé à partir d'une unique tôle d'acier plate épaisse (51); en ce que l'acier du flasque de fermeture d'extrémité a été estampé unidirectionnellement et axialement vers l'extérieur autour du passage d'écoulement central pour former une portion formant embout (10a), d'une pièce avec la portion formant flasque (16, 19); en ce que la portion formant embout (10a) est évasée radialement vers l'extérieur en direction de la portion formant flasque (16, 19) de façon à constituer une portion conique intermédiaire s'étendant très près de la surface du tournant sphérique et se transformant en la portion formant flasque; et en ce que l'évidement annulaire (45) pour la bague d'étanchéité (41) est usiné à la fois dans la portion formant flasque (16, 19) et dans la dite portion conique intermédiaire, de sorte que la largeur de la bande formant corps (12) est inférieure au diamètre du tournant sphérique (20).

2. Robinet à tournant sphérique comme revendiqué dans la revendication 1, caractérisé en ce que l'acier de la portion formant embout (10a) présente une surface interne conique (82) à partir d'un point proche de la surface d'extrémité (48) de la portion formant flasque et se termine en une forme générale cylindrique.

3. Robinet à tournant sphérique comme revendiqué dans la revendication 1, caractérisé en ce que l'acier du flasque de fermeture d'extrémité et de l'embout présente une surface interne de forme générale conique à partir d'un point proche de la surface d'extrémité (48) de la dite portion formant flasque, se transformant en une surface interne de forme générale conique à l'extrémité externe de la portion formant embout.

FIG.-1-

FIG.-2-

FIG.-5-

FIG.-3-

FIG.-4-

FIG.-6-